# EUROPÄISCHE PATENTSCHRIFT

(11) **EP 0 566 952 B1**
(45) Veröffentlichungstag und Bekanntmachung des Hinweises auf die Patenterteilung: **04.06.1997**
(21) Anmeldenummer: 93105953.9
(22) Anmeldetag: 13.04.1993
(51) Int. Cl.: C07F 7/18, C08K 5/54, C08L 69/00

(54) **Thermostabilisierung von aromatischen Polycarbonaten**
Thermal stabilization of aromatic polycarbonates
Stabilisation thermique des polycarbonates aromatiques

(30) Priorität: 23.04.1992 DE 4213321
(43) Veröffentlichungstag der Anmeldung: 27.10.1993
(73) Patentinhaber: BAYER AG, 51368 Leverkusen (DE)
(72) Erfinder: Fennhoff, Gerhard, Dr., W-4156 Willich 2 (DE); Kirsch, Jürgen, Dr., W-5090 Leverkusen 1 (DE); Idel, Karsten-Josef, Dr., W-4150 Krefeld 1 (DE); Kircher, Klaus, Dr., W-5090 Leverkusen 1 (DE); Lundy, Charles, Dr., Pittsburgh PA 15205-9741 (US)

(56) Entgegenhaltungen:
- EP-A- 0 075 697
- EP-A- 0 376 289
- DE-A- 2 854 136
- DE-A- 2 920 450
- DE-A- 2 920 451
- FR-A- 2 395 308
- FR-A- 2 413 437
- GB-A- 1 203 869
- US-A- 4 804 692
- THE JOURNAL OF ORGANIC CHEMISTRY Bd. 58, 1958, Seiten 58 - 64 SPRUNG, M.M.
- ZHURNAL OBSHCHEI KHIMII Bd. 58, Nr. 10, 1988, Seiten 2274 - 2281 KROLEVETS, A. A. ET AL.
- CHEMICAL ABSTRACTS, vol. 108, 1988, Columbus, Ohio, US; abstract no. 75464m, HARDIN, S. ET AL. Seite 691 ;
- CHEMICAL ABSTRACTS, vol. 115, 1991, Columbus, Ohio, US; abstract no. 30488a, KIM-KANG, H. ET AL. Seite 39 ;

## Beschreibung

Gegenstand der vorliegenden Erfindung sind thermoplastische aromatische Polycarbonate und/oder aromatische Polyestercarbonate mit einem Gehalt von 0,01 Gew.-% bis 20,00 Gew.-% vorzugsweise 0,01 Gew% bis 10 Gew% und insbesondere 0,05 Gew% bis 5 Gew%, bezogen auf die eingesetzte Menge Polycarbonat und/oder Polyestercarbonat, an Silicium-Verbindungen der Formeln 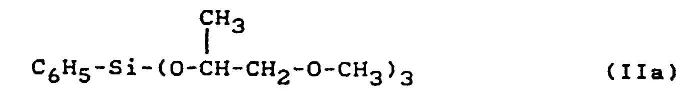 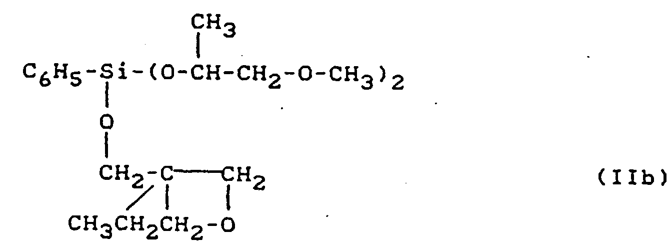 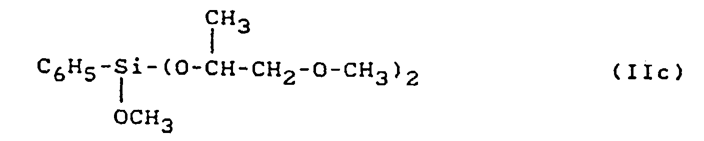 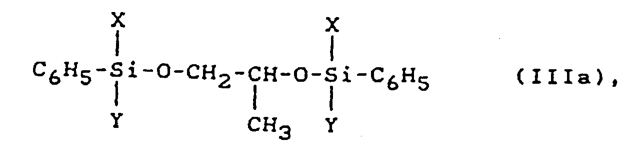 worin

X = Y -O-CH(CH₃)CH₂OCH₃ bzw.

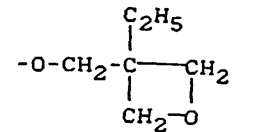

sind, oder der Formel (4) 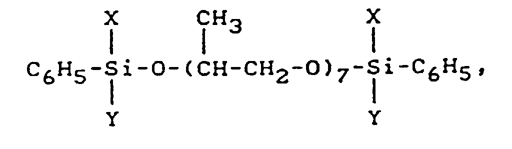 worin

X = Y = OCH(CH₃)CH₂OCH₃ ist.

Die Silicium-Verbindungen der vorstehenden Formeln (IIa), (IIb), (IIc) (IIIa) und (4) werden nach den üblichen in der Literatur beschriebenen Verfahren synthetisiert (siehe beispielsweise Houben-Weyl, Methoden der Organischen Chemie, Band XIII/5, Organo-Silicium-Verbindungen, Georg Thieme Verlag Stuttgart, New York, 1980, S. 199 ff).

Die thermoplastischen Polycarbonate und/oder Polyestercarbonate sind aufgrund ihrer physikalischen Eigenschaften für Anwendungen im optischen Bereich, insbesondere auch bei höheren Temperaturen geeignet. Für diese Anwendungen ist es wichtig, daß die entsprechenden Artikel und Formkörper aus den thermoplastischen Polycarbonaten und/oder Polyestercarbonaten hervorragenden Transmission und Farbe haben müssen.

Die Behandlung durch Extrusion, Verspritzung oder Heißluftalterung verursacht jedoch auf Dauer eine gewisse Schädigung der Polycarbonate und Polyestercarbonate, wobei diese gelb gefärbt werden. Durch die erfindungsgemäße Verwendung von Silicium-Propylenglykol-Verbindungen wird diese durch Einwirkung hoher Temperaturen bedingte Schädigung (d.h. Extrusion, Verspritzung oder Heißluftalterung) weitgehend unterdrückt.

Gemäß US-PS 4,804,692 (D1) werden Polycarbonate durch spezielle, höhermolekulare Si-Verbindungen gegen die Einwirkung von γ-Strahlen stabilisiert. Ein Hinweis auf die Thermostabilisierung gemäß vorliegender Erfindung ist aus (D1) nicht ableitbar.

Gemäß EP-A-0 376 289 (D2) sind Polycarbonate bekannt, die durch Bestrahlung sterilisiert werden können, indem man ihnen u.a. Polyalkylenglycolsilylether zusetzt. Das in den Beispielen angezogene PPG 20 mit einem Molekulargewicht von 2000 hat einen Polymerisationsgrad von 40. Aus (D2) ist auch kein Hinweis auf vorliegende Erfindung zu entnehmen.

Gemäß DE-A-28 54 136 (D3) sind Polycarbonate bekannt, die einen Zusatz von Siloxy-Oxyalkylen-Blockcopolymeren enthalten. Dadurch wird die Verarbeitbarkeit der Polycarbonate verbessert. Auch (D3) legt den Gegenstand der vorliegenden Erfindung nicht nahe.

Die Wirkung der erfindungsgemäßen Si-Verbindungen auf die Stabilität von thermoplastischen Polycarbonaten gegen die Einwirkung hoher Temperaturen ist aber weder bekannt noch naheliegend. Überraschenderweise schützen sie Polycarbonate besonders effektiv vor thermischer Vergilbung und führen insbesondere zu überraschend hohen Lichttransmissionswerten der Polycarbonate, selbst nach sehr langer thermischer Alterung.

Erfindungsgemäß zu stabilisierenden Polycarbonate sind thermoplastische, aromatische Homopolycarbonate und Copolycarbonate, denen z.B. ein oder mehrere der folgenden Diphenole zugrunde liegen:
Hydrochinon
Resorcin
Dihydroxydiphenyle
Bis-(hydroxyphenyl)-alkane
Bis-(hydroxyphenyl)-cycloalkane
Bis-(hydroxyphenyl)-sulfide
Bis-(hydroxyphenyl)-ether
Bis-(hydroxyphenyl)-ketone
Bis-(hydroxyphenyl)-sulfoxide
Bis-(hydroxyphenyl)-sulfone
α,α'-Bis-(hydroxyphenyl)-diisopropylbenzole
sowie deren kernalkylierte und kernhalogenierte Verbindungen. Diese und weitere geeignete Diphenole sind z.B. in den US-Patentschriften 3 028 365, 3 275 601, 3 148 172, 3 062 781, 2 991 273, 3 271 367, 2 999 835, 4 982 014 und 2 999 846, in den deutschen Offenlegungsschriften 1 570 703, 2 063 050, 2 063 052, 2 211 956, 2 211 957, der französischen Patentschrift 1 561 518 und in der Monographie "H. Schnell, Chemistry and Physics of Polycarbonates, Interscience Publishers, NY, 1964" beschrieben.

Bevorzugte Diphenole sind z.B.:
4,4'-Dihydroxydiphenyl
2,2-Bis-(4-hydroxyphenyl)-propan
2,4-Bis-(4-hydroxyphenyl)-2-methylbutan
1,1-Bis-(4-hydroxyphenyl)-cyclohexan
α,α'-Bis-(4-hydroxyphenyl)-p-diisopropylbenzol
2,2-Bis-(3-methyl-4-hydroxyphenyl)-propan
2,2-Bis-(3-chlor-4-hydroxyphenyl)-propan
Bis-(3,5-dimethyl-4-hydroxyphenyl)-methan
2,2-Bis-(3,5-dimethyl-hydroxyphenyl)-methan
Bis-(3,5-dimethyl-4-hydroxyphenyl)-sulfon
2,4-Bis-(3,5-dimethyl-4-hydroxyphenyl)-2-methylbutan
1,1-Bis-(3,5-dimethyl-4-hydroxyphenyl)-cyclohexan
1,1-Bis-(4-hydroxyphenyl)-3,3,5-trimethylcyclohexan
α,α'-Bis-(3,5-dimethyl-4-hydroxyphenyl)-p-diisopropylbenzol und
2,2-Bis-(3,5-dichlor-4-hydroxyphenyl)-propan.

Besonders bevorzugte Diphenole sind z.B.:
2,2-Bis-(4-hydroxyphenyl)-propan
2,2-Bis-(3,5-dimethyl-hydroxyphenyl)-propan
2,2-Bis-(3,5-dichlor-4-hydroxyphenyl)-propan
2,2-Bis-(3,5-dibrom-4-hydroxyphenyl)-propan
1,1-Bis-(4-hydroxyphenyl)-cyclohexan und
1,1-Bis-(4-hydroxyphenyl)-3,3,5-trimethylcyclohexan.

Bevorzugte aromatische Polycarbonate sind solche, denen ein oder mehrere der als bevorzugt genannten Diphenole zugrundeliegen. Besonders bevorzugt werden Copolycarbonate, denen 2,2-Bis-(hydroxyphenyl)-propan und eines der anderen als besonders bevorzugt genannten Diphenole zugrundeliegen. Besonders bevorzugt sind weiterhin Polycarbonate allein auf Basis von 2,2-Bis-(4-hydroxyphenyl)-propan.

Die aromatischen Polycarbonate können nach bekannten Verfahren hergestellt werden, so z.B. nach dem Schmelzumesterungsverfahren aus Bisphenol und Diphenylcarbonat und dem Zweiphasengrenzflächenverfahren aus Bisphenolen und Phosgen, wie es inder oben genannten Literatur beschrieben ist.

Die aromatischen Polycarbonate können auch verzweigt sein durch den Einbau von drei- oder mehr als dreifunktionellen Verbindungen.

Die aromatischen Polycarbonate dieser Art sind z.B. in den deutschen Offenlegungsschriften 1 570 533, 1 595 762, 2 116 974, 2 113 347, der britischen Patentschrift 1 079 821, der US-Patentschrift 3 544 514 und in der deutschen Offenlegungsschrift 2 500 092 beschrieben.

Einige der verwendbaren Verbindungen mit drei oder mehr als drei phenolischen Hydroxygruppen sind beispielsweise Phloroglucin, 4,6-Dimethyl-2,4,6-tri-(4-hydroxyphenyl)hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]propan, 2,4-Bis-(4-hydroxyphenyl-isopropyl)-phenol, 2,6-Bis-(2'-hydroxy-5'-methylbenzyl)-4-methylphenol, 2-(4-Hydroxyphenyl)-2-(2,4-dihydroxyphenyl)-propan, Hexa-[4-(4-hydroxyphenylisopropyl)phenyl]-ortho-terephthalsäureester, Tetra-(4-hydroxyphenylisopropyl)-phenoxy)-methan und 1,4-Bis-[(4',4"-dihydroxytriphenyl)-methyl]-benzol. Einige der sonstigen dreifunktionellen Verbindungen sind 2,4-Dihydroxybenzoesaure, Trimesinsäure, Cyanurchlorid und 3,3-Bis-(4-hydroxy-3-methyl-phenyl)-2-oxo-2,3-dihydroindol.

Die aromatischen Polycarbonate sollen in der Regel mittlere Gewichtsmittel-Molekulargewichte Mw von 10.000 bis über 200.000, vorzugsweise von 20.000 bis 80.000 haben, ermittelt durch Messung der rel. Viskosität in CH₂Cl₂ bei 25°C und einer Konzentration von 0,5 g/dl.

Zur Einstellung des Molekulargewichts Mw der Polycarbonate werden in bekannter Weise Kettenabbrecher, wie beispielsweise Phenol oder Halogenphenole oder Alkylphenole in den berechneten Mengen eingesetzt.

Erfindungsgemäß zu stabilisierende Polyestercarbonate sind aromatische Polyestercarbonate, die aus mindestens einem aromatischen Bisphenol, aus mindestens einer aromatischen Dicarbonsäure und aus Kohlensäure aufgebaut sind. Geeignete aromatische Dicarbonsäuren sind beispielsweise Orthophthalsäure, Terephthalsäure, Isophthalsäure, tert.-Butylisophthalsäure, 3,3'-Diphenyldicarbonsäure, 4,4'-Diphenyldicarbonsäure, 4,4'-Diphenyl-4,4'-Diphenyldicarbonsäure, 4,4'-Benzophenondicarbonsaure, 3,4'-Benzophenondicarbonsäure, 4,4'-Diphenylsulfondicarbonsäure, 2,2-Bis-(4-Carboxyphenyl)-propan, Trimethyl-3-phenylindan-4,5'-dicarbonsäure.

Von den aromatischen Dicarbonsäuren werden besonders bevorzugt die Terephthalsäure und/oder Isophthalsäure eingesetzt.

Die aromatischen Polyestercarbonate können nach Verfahren hergestellt worden sein, wie sie für die Polyestercarbonatherstellung aus der Literatur bekannt sind, so z.B. nach Verfahren in homogener Lösung, nach Schmelzumesterungsverfahren, und nach dem Zweiphasengrenzflächenverfahren.

Schmelzumesterungsverfahren werden beispielsweise in den US 3 494 885, 4 386 186, 4 661 580, 4 680 371 und 4 680 372, den EP-A 26 120, 26 121, 26 684, 28 030, 39 845, 91 602, 97 9780, 79 075, 146 887, 156 103, 234 913 , 234 919 und 240 301 sowie den DE-AS 1 495 626, 2 232 877 beschrieben. Das Zweiphasengrenzflächenverfahren wird beispielsweise in den EP-A 68 014, 88 322, 134 898, 151 750, 182 189, 219 708, 272 426, in den DE-OS 2 940 024, 3 007 934, 3 440 020 und in Polymer Reviews, Volume 10, "Condensation Polymers by Interfacial and Solution Methods", Paul W. Morgan, Interscience Publishers, New York 1965, Kap. III, S. 325, Polyester beschrieben.

Die Einarbeitung der Silicium-Verbindungen in die thermoplastischen Polycarbonate und Polyestercarbonate erfolgt in bekannter Weise und kann vorzugsweise sogleich mit der Herstellung von Formkörpern oder Folien gekoppelt werden.

Gegenstand der vorliegenden Erfindung ist somit auch ein Verfahren zur Herstellung der erfindungsgemäßen Mischungen, das dadurch gekennzeichnet ist, daß man in thermoplastische aromatische Polycarbonate und/oder aromatische Polyestercarbonate die Verbindungen der Formeln (IIa), (IIb), (IIc), (IIIa) oder (4) in Mengen von 0,01 Gew.-% bis 20,0 Gew.-%, vorzugsweise 0,01 Gew.-% bis 10 Gew.-%, insbesondere von 0,05 Gew.-% bis 5,0 Gew.-%, bezogen auf die eingesetzte Menge Polycarbonat und/oder Polyestercarbonat, über die Polycarbonat- und/oder Polyestercarbonatschmelze oder über eine Lösung des Polycarbonats und/oder Polyestercarbonats in bekannten inerten Lösungsmitteln einarbeitet und die erhaltenen Mischungen gegebenenfalls nach Verdampfen des Lösungsmittels abkühlt und granuliert, und vorzugsweise sogleich zu Formkörpern verarbeitet oder zu Folien vergießt.

Den erfindungsgemäß zu stabilisierenden Polycarbonaten und/oder Polyestercarbonaten können noch die üblichen Additive wie Entformungsmittel, Weichmacher, Füllstoffe und Verstärkungsstoffe in bekannter Weise zugesetzt sein.

Die Verarbeitung der erfindungsgemäß stabilisierten Polycarbonate und/oder Polyestercarbonate zu Formkörpern der verschiedensten Art kann in bekannter Weise durch Extrusion oder Spritzguß erfolgen.

Die Verarbeitung der erfindungsgemäß stabilisierten Polycarbonate erfolgt beispielsweise auf Extrudern oder Knetern oder aus Lösungen zu Formkörpern verschiedenster Art; beispielsweise zu Brillen, Babyflaschen, Wasserbehaltern und Folien.

Die Behandlung der stabilisierten Polycarbonat- und/oder Polyestercarbonat-Formkörper bei hohen Temperaturen erfolgt beispielsweise durch Heißluftalterung bei 130°C für 1.000 Stunden. Die Transmission wurde nach ASTM 1003, der Yellownessindex nach ASTM D bestimmt.

Geeignete Formkörper aus den erfindungsgemäß stabilisierten Polycarbonaten und/oder Polyestercarbonaten sind beispielsweise Platten, insbesondere Hohlkammerplatten, Compact Discs, Elektroisolierfolien; der technische Einsatz der erfindungsgemäß stabilisierten Polycarbonate und/oder Polyestercarbonate erfolgt somit beispielsweise im Bausektor, Beleuchtungssektor, auf optischem Gebiet und in der Elektroindustrie.

### Beispiele

Zur Stabilisierung eingesetzte Komponenten:
1. Triphenylphosphin
2. Ein Phosphit der Formel

   P(O-B)₃

   worin B: 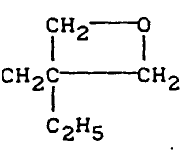
3. Ein Silicium-Propylenglykol-Derivat der Formel (IIa) 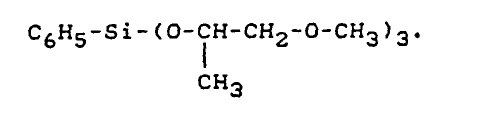
4. Ein Silicium-Propylenglykol-Derivat der Formel (4) 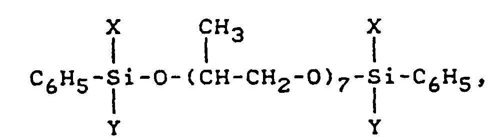 worin

   X = Y = OCH(CH₃)CH₂OCH₃

   ist.

Alle Komponenten wurden in Bisphenol A-Polycarbonat mit phenolischen Endgruppen und Mw von 28.000 eingesetzt.

### A) Synthese der Stabilisatoren

### Komponente 3

### Tri-(1-methoxy-propyl-2-oxy)-phenylsilan

190,2 g (2,11 mol) 1-Methoxy-2-propanol und 223,7 g (2,21 mol) Triethylamin werden bei Raumtemperatur in 1.000 g Toluol unter Stickstoff vorgelegt (Lösung I). 148,1 g (0,70 mol) Trichlorphenylsilan gelöst in 300 g Toluol werden innerhalb von 30 Minuten unter Stickstoff bei Raumtemperatur zugetropft (Lösung II) und die Lösung anschließend auf 60 bis 70°C erwärmt.

Nach vierstündigem Rühren bei dieser Temperatur arbeitet man den Ansatz wie folgt auf: Abfiltrieren des entstandenen Salzes und Waschen desselbigen mit 500 ml Toluol, Ansäuern des Filtrats mit 10 %iger Salzsäure und Elektrolytfreiwaschen desselbigen mit destilliertem Wasser, Entfernen des Toluols im Wasserstrahlpumpenvakuum bei maximal 70°C, Destillation des Rückstandes im Ölpumpenvakuum bei maximaler Sumpftemperatur von 150°C.
Ausbeute: 164 g.

### Komponente 4

Eine typische Zubereitung der Silicium-Propylenglykol-Verbindungen der Formel III ist wie folgt:
162,21 g 1-Methoxy-2-propanol wurden in 1.500 ml Toluol gelöst und verrührt. 196,71 g Triethylamin wurden hinzugegeben. Nach Stickstoff-Abblasung wurden 126,93 g Phenyltrichlorsilan langsam zugetropft. Die Lösung wurde für 4 Stunden verrührt. Das Produkt wurde mit Wasser gewaschen und getrocknet.

### B) Herstellung der Mischungen

Die Additive wurden durch Mischextrusion in ein Polycarbonatharz (Bisphenol-A-Homopolycarbonat, ηᵣₑₗ 1,28 gemessen in CH₂Cl₂ bei 25°C und einer Konzentration von 0,5 g in 100 ml CH₂Cl₂) eingearbeitet und anschließend verspritzt. Die Spritzteile wurden bei 130°C in Heißluft gealtert. Die Vergilbungszahlen (VZ) und %-Transmissionen wurden nach 0, 500 und 1.000 Stunden gemessen. In Tabelle 1 sind die Ergebnisse angegeben, die für die Polycarbonate und die additivhaltigen Zusammensetzungen an 4 mm dicken Plättchen gemessen wurden. Tabelle 2 sind die %-Transmissionen für dieselben Zusammensetzungen.

**Tabelle 1**

| Zusammensetzung | VZ (O Stn.) | VZ (500 Stn.) | VZ (1.000 Stn.) |
|---|---|---|---|
| Polycarbonat ohne Zusatz | 4,2 | 7,8 | 11,2* |
| 0,1 % Komponente 1 | 2,8 | 6,7 | 11,1 * |
| 0,4 % Komponente 1 | 2,6 | 6,6 | 11,0 * |
| 0,1 % Komponente 2 | 4,1 | 7,1 | 10,9 * |
| 0,4 % Komponente 3 | 3,0 | 5,8 | 7,9 ** |
| 0,4 % Komponente 4 | 3,3 | 6,3 | 9,2 ** |

**Tabelle 2**

| Zusammensetzung | %-Transmission (O Stn.) | %-Transmission (500 Stn.) | %-Transmission (1.000 Stn.) |
|---|---|---|---|
| Polycarbonat ohne Zusatz | 89,35 | 88,52 | 87,57 * |
| 0,1 % Komponente 1 | 89,30 | 88,35 | 87,30 * |
| 0,4 % Komponente 1 | 89,35 | 88,42 | 87,35 * |
| 0,1 % Komponente 2 | 88,83 | 88,25 | 87,27 * |
| 0,4 % Komponente 3 | 89,92 | 89,60 | 89,02 ** |
| 0,4 % Komponente 4 | 90,34 | 89,66 | 88,89 ** |

| | | | |
|---|---|---|---|
| * Vergleich | | | |
| ** Erfindung | | | |

## Patentansprüche

1. Thermoplastische aromatische Polycarbonate und/oder aromatische Polyestercarbonate mit einem Gehalt von 0,01 Gew.-% bis 20,00 Gew.-%, bezogen auf die eingesetzte Menge Polycarbonat und/oder Polyestercarbonat, an Silicium-Verbindungen der Formeln 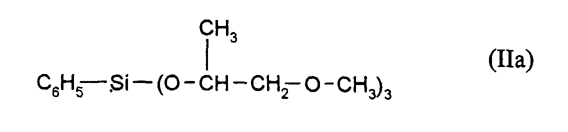 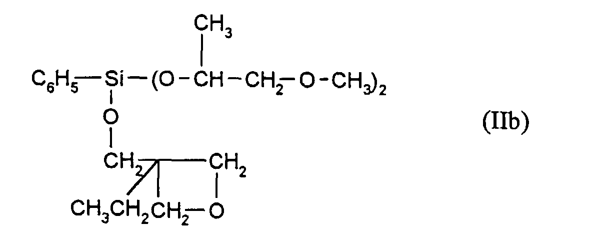 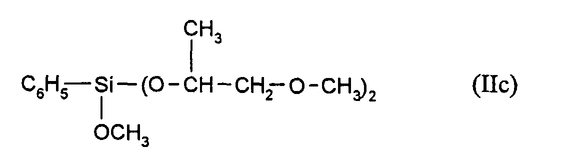 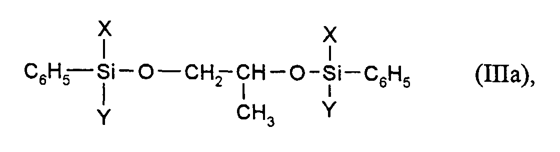 worin 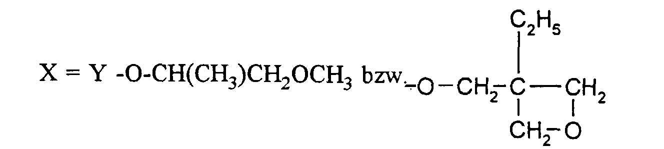 sind, oder der Formel (4) 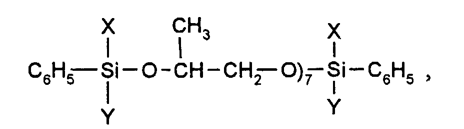 worin
X = Y = OCH(CH₃)CH₂OCH₃
ist.

2. Verfahren zur Herstellung der Mischungen des Anspruchs 1, dadurch gekennzeichnet, daß man in thermoplastische aromatische Polycarbonate und/oder aromatische Polyestercarbonate die Verbindungen der Formeln (IIa), (IIb), (IIc), (IIIa) oder (4) in den im Anspruch 1 angegebenen Gewichtsmengen, über die Polycarbonat- und/oder Polyestercarbonatschmelze oder über eine Lösung des Polycarbonats und/oder Polyestercarbonats in bekannten inerten Lösungsmitteln einarbeitet und die erhaltenen Mischungen gegebenenfalls nach Verdampfen des Lösungsmittels abkühlt und granuliert.

3. Verfahren gemäß Anspruch 2, dadurch gekennzeichnet, daß man die Mischungen sogleich zu Formkörern verarbeitet oder zu Folien vergießt.

4. Mischungen des Anspruchs 1 mit einem Gehalt von 0.01 Gew.% bis 10 Gew.% an den Siliciumverbindungen.

5. Mischungen des Anspruchs 1 mit einem Gehalt von 0.05 Gew.% bis 5 Gew.% an den Siliciumverbindungen.

## Claims

1. Thermoplastic aromatic polycarbonates and/or aromatic polyester carbonates having a content of 0.01 wt.% to 20.00 wt.%, relative to the quantity of polycarbonate and/or polyester carbonate used, of silicon compounds of the formulae 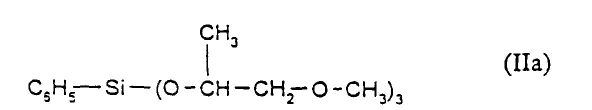 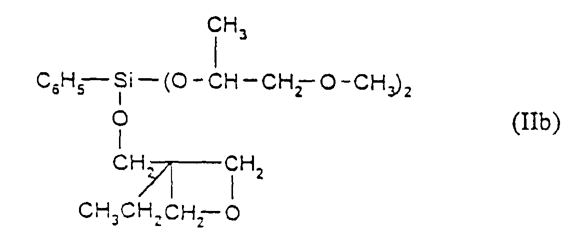 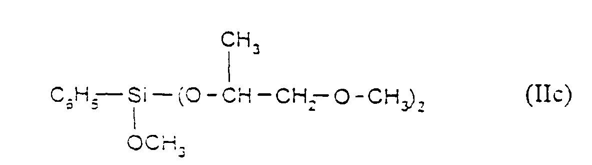 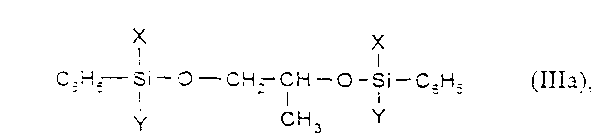 in which
X = Y -O-CH(CH₃)CH₂OCH₃
or 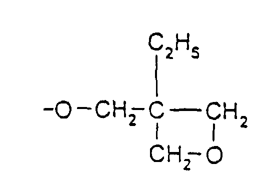 or
of the formula 4 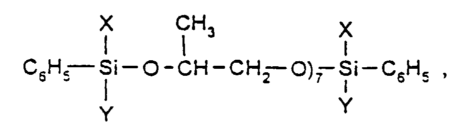 in which
X = Y = OCH(CH₃)CH₂OCH₃.

2. Process for the production of the mixtures of claim 1, characterised in that the compounds of the formulae (IIa), (IIb), (IIc), (IIIa) or (4) are incorporated in the quantities stated in claim 1 into thermoplastic aromatic polycarbonates and/or aromatic polyester carbonates via the polycarbonate and/or polyester carbonate melt or via a solution of the polycarbonate and/or polyester carbonate in known inert solvents and the resultant mixtures, optionally after vaporisation of the solvent, are cooled and pelletised.

3. Process according to claim 2, characterised in that the mixtures are immediately processed into mouldings or cast into sheets.

4. Mixtures of claim 1 having a content of the silicon compounds of 0.01 wt.% to 10 wt.%.

5. Mixtures of claim 1 having a content of the silicon compounds of 0.05 wt.% to 5 wt.%.

## Revendications

1. Polycarbonates aromatiques et/ou polyestercarbonates aromatiques thermoplastiques possédant une teneur de 0,01% en poids à 20,00% en poids, rapportés à la quantité de polycarbonate et/ou de polyestercarbonate mise en oeuvre, en composés de silicium répondant aux formules 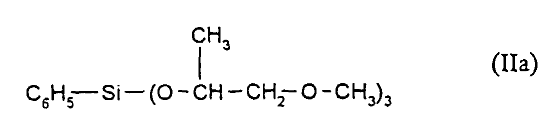 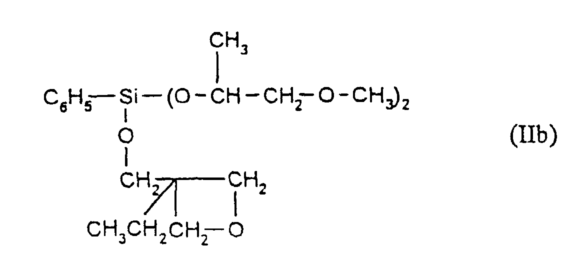 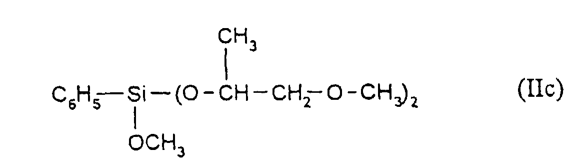 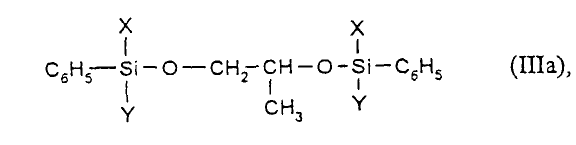 dans lesquelles
X = Y -O-CH(CH₃)CH₂OCH₃,
respectivement 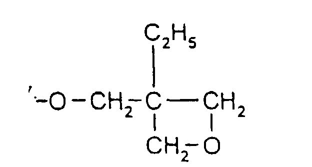 ou répondant à la formule (4) 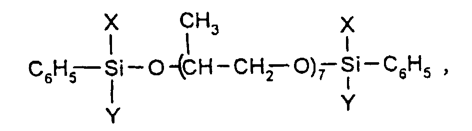 dans laquelle
X = Y = OCH(CH₃)CH₂OCH₃.

2. Procédé pour la préparation des mélanges selon la revendication 1, caractérisé en ce qu'on incorpore, dans des polycarbonates aromatiques et/ou des polyestercarbonates aromatiques thermoplastiques, les composés répondant aux formules (IIa), (IIb), (IIc), (IIIa) ou (4) dans les proportions indiquées à la revendication 1, via la masse fondue du polycarbonate et/ou du polyestercarbonate ou via une solution du polycarbonate et/ou du polyestercarbonate dans des solvants inertes connus, on refroidit les mélanges obtenus éventuellement après évaporation du solvant et on les granule.

3. Procédé selon la revendication 2, caractérisé en ce qu'on traite les mélanges immédiatement pour obtenir des corps moulés ou bien on les coule immédiatement pour obtenir des feuilles.

4. Mélanges selon la revendication 1, possédant une teneur de 0,01% en poids à 10% en poids en composés de silicium.

5. Mélanges selon la revendication 1, possédant une teneur de 0,05% en poids à 5% en poids en composés de silicium.
